# FASCICULE DE BREVET EUROPEEN

(11) **EP 1 747 813 B1**
(45) Date de publication et mention de la délivrance du brevet: **24.02.2010**
(21) Numéro de dépôt: 06291174.8
(22) Date de dépôt: 17.07.2006
(51) Int. Cl.: B01J 23/10, B01J 21/06, B01J 23/70, B01J 23/34, B01J 8/10, B01J 19/28, C01B 3/38, H01M 8/06, F23C 10/20, B01J 23/745, B01J 23/75, B01J 23/755, B01J 23/83, B01J 23/72

(54) **Nouvelle masse active oxydo-réductrice pour un procédé d'oxydo-réduction en boucle**
Neues Redoxmaterial für ein Redox-Kreislaufverfahren
New redox material for a loop redox process

(30) Priorité: 29.07.2005 FR 0508184
(43) Date de publication de la demande: 31.01.2007
(73) Titulaire: Institut Français du Pétrole, 92852 Rueil Malmaison Cedex (FR)
(72) Inventeur: Becue, Thierry, 69006 Lyon (FR); Marchand, Karin, 69008 Lyon (FR); Lambert, Arnold, 42410 Chavanay (FR); Lebas, Etienne, 38200 Vienne (FR)

(56) Documents cités:
- EP-A- 1 632 715
- WO-A-00/41799
- WO-A-99/16543
- FR-A- 2 846 710
- US-A- 5 447 024
- US-A1- 2002 195 173

## Description

### DOMAINE DE L'INVENTION

Le domaine de la présente invention concerne la production d'énergie, les turbines à gaz, les chaudières et les fours, notamment pour l'industrie pétrolière, verrière et de cimenterie.

Le domaine de l'invention couvre également l'utilisation de ces moyens pour la production d'électricité, de chaleur ou de vapeur.

Le domaine de l'invention regroupe plus particulièrement les dispositifs et les procédés permettant, par la mise en oeuvre de réactions d'oxydo-réduction d'une masse active, dite masse d'oxydo-réduction, de produire un gaz chaud à partir d'un hydrocarbure ou d'un mélange d'hydrocarbures, et d'isoler le dioxyde de carbone produit de façon à pouvoir le capturer.

La croissance de la demande énergétique mondiale conduit à construire de nouvelles centrales thermiques et à émettre des quantités croissantes de dioxyde de carbone préjudiciables pour l'environnement. La capture du dioxyde de carbone en vue de sa séquestration est ainsi devenue une nécessité incontournable.

Une des techniques pouvant être utilisées pour capturer le dioxyde de carbone consiste à mettre en oeuvre des réactions d'oxydo-réduction d'une masse active pour décomposer la réaction de combustion en deux réactions successives. Une première réaction d'oxydation de la masse active avec de l'air ou un gaz jouant le rôle de comburant, permet, du fait du caractère exothermique de l'oxydation, d'obtenir un gaz chaud dont l'énergie peut ensuite être exploitée. Une seconde réaction de réduction de la masse active ainsi oxydée à l'aide d'un gaz réducteur permet ensuite d'obtenir une masse active réutilisable ainsi qu'un mélange gazeux comprenant essentiellement du dioxyde de carbone et de l'eau.

Un intérêt de cette technique est de pouvoir facilement isoler le dioxyde de carbone dans un mélange gazeux pratiquement dépourvu d'oxygène et d'azote.

Dans la suite du texte, on parlera de procédé en boucle d'oxydo-réduction pour désigner un procédé mettant en oeuvre une masse oxydo-réductrice, dite masse active, passant successivement d'un état oxydé à un état réduit, puis de l'état réduit à l'état initial oxydé.

On notera en abrégé ce procédé CLC en raison de son appellation de "chemical looping" dans la terminologie anglo-saxonne, qu'on traduira en langue française par procédé d'oxydo-réduction en boucle sur masse active.

La présente invention s'applique également au domaine de la production d'hydrogène par un tel procédé d'oxydo-réduction en boucle. Dans cette application, l'hydrocarbure, ou le mélange d'hydrocarbures, est réduit principalement sous forme de monoxyde de carbone et d'hydrogène.

On trouvera une description complète du procédé d'oxydo-réduction en boucle sur masse active dans les demandes de brevet français FR-A-2 486 710 pour la version rotative et FR-A-1 632 715 pour la version rotative simulée. Rappelons que ce procédé peut également être mis en oeuvre à l'état de lit circulant avec des particules de masse active de l'ordre de la centaine de microns.

### EXAMEN DE L'ART ANTERIEUR

Le brevet US-A-5,447,024 décrit un procédé CLC comprenant un premier réacteur de réduction mettant en oeuvre une réaction de réduction d'une masse active à l'aide d'un gaz réducteur, et un second réacteur d'oxydation permettant de restaurer la masse active dans son état oxydé par une réaction d'oxydation avec de l'air humidifié.

La masse active passant alternativement de sa forme oxydée à sa forme réduite et inversement, décrit un cycle d'oxydo-réduction. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée, et le réacteur de réduction est le réacteur dans lequel la masse oxydo-réductrice est réduite.

Les effluents gazeux issus des deux réacteurs sont préférentiellement introduits dans les turbines à gaz d'une centrale électrique. Le procédé décrit dans ce brevet permet d'isoler le dioxyde de carbone par rapport à l'azote, ce qui facilite ainsi la capture du dioxyde de carbone.

Le brevet cité ci-dessus utilise la technologie du lit circulant pour permettre le passage continu de la masse active de son état oxydé à son état réduit.

Ainsi, dans le réacteur de réduction, la masse active (MₓO_{y}) est tout d'abord réduite à l'état MₓO_{y-2n+m/2}, par l'intermédiaire d'un hydrocarbure CₙHₘ, qui est corrélativement oxydé en CO₂ et H₂0, selon la réaction (1), ou éventuellement en mélange CO + H₂ selon les proportions utilisées.

(1) CₙHₘ + MₓO_{y} → n CO₂+ m/2 H₂O + MₓO_{y-2n-m/2}

Dans le réacteur d'oxydation, la masse active est restaurée à son état oxydé (MₓO_{y}) au contact de l'air selon la réaction (2), avant de retourner vers le premier réacteur.

(2) MₓO_{y-2n+m/2} + (n+m/4) O₂→MₓO_{y}

Le même brevet revendique comme masse active l'utilisation du couple oxydo-réducteur NiO/Ni, seul ou associé au liant YSZ (qui se définit par zircone stabilisée par l'yttrium, également appelée zircone yttriée).

L'intérêt du liant dans une telle application est d'augmenter la résistance mécanique des particules, trop faible pour une mise en oeuvre en lit circulant lorsque NiO/Ni est utilisé seul.

La zircone yttriée étant en outre conductrice ionique des ions O²⁻ aux températures d'utilisation, la réactivité du système NiO/Ni/YSZ s'en trouve améliorée.

De nombreux types de liants en plus de la zircone yttriée (YSZ) déjà citée ont été étudiés dans la littérature, afin d'augmenter la résistance mécanique des particules à un coût moins élevé que l'YSZ. Parmi ceux ci, on peut citer l'alumine, les spinelles d'aluminate métallique, le dioxyde de titane, la silice, la zircone, le kaolin.

D'une manière générale, l'YSZ reste toutefois le liant considéré comme le plus efficace du fait de la conductivité ionique déjà mentionnée.

Par ailleurs, dans le brevet US 6,605,264, les oxydes mixtes de type cérine-zircone sont décrits dans une application en post-combustion automobile pour le stockage/déstockage de l'oxygène et sont aussi, comme la zircone yttriée, des conducteurs ioniques des ions O^{2-.}

Ils sont de manière générale utilisés comme support des métaux précieux et permettent l'ajustement de la concentration en oxygène dans les gaz d'échappement pour la catalyse 3 voies. Ils apparaissent alors comme support de catalyseur, généralement en mélange avec d'autres oxydes.

La présente invention constitue donc une application nouvelle de ces oxydes mixtes de type cérine-zircone dans le domaine des procédés utilisant une masse active d'oxydo-réduction, application nouvelle dans laquelle ils vont jouer un rôle à la fois comme participant au stockage et déstockage de l'O₂, mais aussi un rôle de liant renforçant la résistance mécanique qui est particulièrement intéressant dans le cas d'une mise en oeuvre de la masse active en lit circulant.

### DESCRIPTION SOMMAIRE DE L'INVENTION

L'invention concerne une masse active d'oxydo-réduction, notamment pour procédé d'oxydo-réduction en boucle, caractérisée en ce que ladite masse comprend, d'une part, un couple, ou un ensemble de couples d'oxydoréduction, choisi dans le groupe formé par : CuO/Cu, Cu₂O/Cu, NiO/Ni, Fe₂O₃/Fe₃O₄, FeO/Fe, Fe₃O₄FeO, MnO₂/Mn₂O₃, Mn₂O₃/Mn₃O₄, Mn₃O₄/MnO, MnO/Mn, Co₃O₄/CoO, CoO/Co, et, d'autre part, d'un liant contenant au moins un oxyde mixte de cérine-zircone, de formule générale CeₓZr₁₋ₓO₂, avec 0,05<x<0,95, et préférentiellement 0,5<x<0,9.

La masse oxydo-réductrice peut se présenter sous forme de poudre, de billes, d'extrudés, ou de revêtement (appelé "washcoat" dans la terminologie anglo-saxonne) déposé sur un substrat de type monolithe.

La proportion de liant dans la masse oxydo-réductrice peut varier de 10% à 95% poids, préférentiellement de 20 % à 80 % poids, et de manière encore préférée de 30% à 70% poids

Il est possible d'utiliser comme liant soit la cérine-zircone seule, soit la cérine-zircone en mélange avec d'autres types de liants comme l'alumine, les aluminates de type spinelle, la silice, le dioxyde de titane, le kaolin, l'YSZ, les perovskites. De préférence, le liant pouvant être mélangé à la cérine-zircone sera choisi dans le sous groupe formé par l'alumine, les aluminates, l'YSZ, et les perovskites.

La masse oxydo-réductrice selon l'invention se caractérise par le fait que le liant qu'elle utilise contient au moins une certaine proportion de cérine-zircone, cette proportion pouvant aller de 0,1 à 1, et préférentiellement de 0,5 à 1.

Le nouveau type de masse oxydo-réductrice selon l'invention, est donc caractérisé par l'utilisation d'un liant contenant de la cérine-zircone, le couple d'oxydo-réduction pouvant être choisi dans le sous groupe formé par NiO/Ni, CuO/Cu, Fe₂O₃/Fe₃O₄, Mn₃O₄/MnO, CoO/Co.

Le liant utilisé dans la masse d'oxydo-réduction selon la présente invention permet d'augmenter d'au moins 10%, et préférentiellement d'au moins 15%, la capacité de transfert d'oxygène entre le réacteur d'oxydation et le réacteur de réduction.

L'utilisation de la masse d'oxydo-réduction selon la présente invention pourra se faire selon les applications en lit circulant, en réacteur rotatif, ou en réacteur rotatif simulé telles que décrites dans les demandes de brevet français FR-A-2 486 710 et FR-A-1 632 715.

### DESCRIPTION DETAILLEE DE L'INVENTION

La présente invention concerne l'utilisation d'un nouveau type de masse active dans les procédés de type CLC. Ces procédés font généralement appel à deux réacteurs distincts pour effectuer d'une part dans un réacteur dit de réduction, la réduction de la masse active au moyen d'un hydrocarbure, ou plus généralement d'un gaz réducteur, permettant de générer corrélativement un effluent chaud vecteur d'énergie, et d'autre part dans un réacteur dit d'oxydation, la restauration de la masse active à son état oxydée par la combustion d'hydrocarbures, tout en ségréguant le CO₂ formé qui se trouve généralement en mélange avec de la vapeur d'eau.

La masse active d'oxydo-réduction est composé d'un premier élément appelé couple oxydo-réducteur choisi dans le groupe formé par les oxydes métalliques suivants: CuO/Cu, Cu₂O/Cu, NiO/Ni, CoO/Co, Fe₂O₃/Fe₃O₄, FeO/Fe, Fe₃O₄/FeO, MnO₂/Mn₂O₃, Mn₂O₃/Mn₃O₄, Mn₃O₄/MnO, MnO/Mn, Co₃O₄/CoO, CoO/Co, et d'un second élément appelé liant qui, dans le cadre de l'invention, contient au moins un oxyde mixte de cérine-zircone, et préférentiellement une solution solide de cérine-zircone, éventuellement en mélange avec d'autres types de liants.

Le premier élément peut également être constitué d'un mélange quelconque des oxydes métalliques du groupe cité. La proportion de liant dans la masse d'oxydo-réduction varie entre 10 et 95% poids, préférentiellement entre 20 % et 80 % poids, et de manière encore préférée entre 30% et 70% poids.

Le réacteur de réduction est généralement opéré à des températures généralement comprises entre 500°C et 1000°C, l'oxyde métallique étant réduit par le ou les hydrocarbures selon la réaction (1), et la solution solide de cérine-zircone réagissant selon la réaction (3):

(3) 2 CeO₂ + CₙHₘ -> Ce₂O₃ + x CO₂ + y H₂O

En comparaison avec le liant YSZ, à iso-teneur en oxyde métallique, le liant utilisé dans la présente invention permet de convoyer plus d'oxygène du réacteur d'oxydation vers le réacteur de réduction.

### EXEMPLE COMPARATIF

Dans cet exemple on compare les performances d'une masse d'oxydoréduction selon l'art antérieur et d'une masse d'oxydo-réduction selon la présente invention.
- La masse d'oxydo-réduction selon l'art antérieur est un oxyde de nickel NiO utilisant comme liant une solution de zircone yttriée préparée de la manière suivante :
   On mélange Ni(NO₃)₂, Y(NO₃)₃ et ZrO(NO₃)₂ en solution aqueuse, puis on ajoute ce mélange sur un pied d'ammoniaque à 25%, à température ambiante. Après agitation pendant 12h, on filtre, sèche et calcine à 600°C pendant 2h, pour obtenir un matériau comprenant 35 % massique de NiO, et une solution solide (confirmée par diffraction des rayons X) de zircone stabilisée à l'yttrium, contenant 84 % massique de zircone et 16 % d'yttrine (soit une zircone yttriée à 9% molaire en Y₂O₃).
- La masse d'oxydo-réduction selon la présente invention utilise le même oxyde de métal NiO avec comme liant une solution solide de cerine-zircone préparée de la manière suivante :

On mélange Ni(NO₃)₂, Ce(NO₃)₃ et ZrO(NO₃)₂ en solution aqueuse, puis on ajoute ce mélange sur un pied d'ammoniaque à 25%, à température ambiante. Après agitation pendant 12h, on filtre, sèche puis calcine à 600°C sous air pendant 2h, pour obtenir un matériau comprenant 27% massique de NiO, et une solution solide (confirmée par diffraction des rayons X) de cérine-zircone contenant 69 % massique de cérine, et 31 % de zircone.

Les deux masses d'oxydo-réduction sont testées en lit fixe dans un réacteur en quartz placé dans un four chauffé électriquement. Le lit fixe contient 125 milligrammes de masse d'oxydo-réduction dispersée de façon uniforme dans 5 grammes de carbure de silicium. Le carbure de silicium est inerte vis à vis des réactions mises en jeu et ne sert qu'à diluer la masse d'oxydo-réduction au sein du réacteur de test.

Les cycles réduction/oxydation ont été simulés en injectant successivement un pulse de méthane (50 NI/h d'azote contenant 5% CH₄), puis un pulse d'oxygène à un intervalle de temps de 120 secondes. Les températures d'oxydation et de réduction sont égales à 850°C.

La taille des particules de masse d'oxydo-réduction utilisées pour le test comparatif est comprise entre 40 et 100 microns avec une taille moyenne de 70 microns.

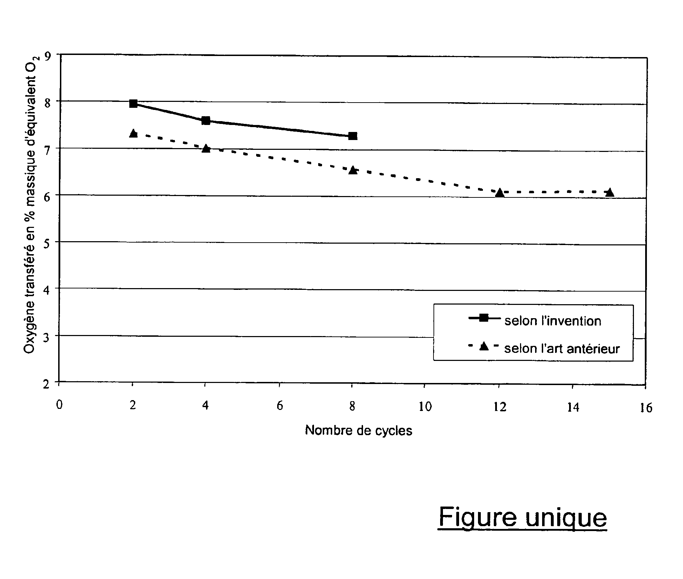

La figure unique montre la quantité d'équivalent O₂ dégagé lors de la réduction des particules (en ordonnée), rapportée à la masse de particules utilisée, en fonction du nombre de cycles d'oxydo-réduction (en abscisse).

La quantité d'équivalent O₂ est calculée à partir des quantités de CO₂, CO et H₂O formées lors de la réaction; c'est à dire que 1 mole de CO₂ correspond à 1 mole d'O₂ consommé, 1 mole de CO correspond à ½ mole d'O₂ consommé, 1 mole d'H₂O correspond à ½ mole d'O₂ consommé. La quantité massique d'O₂ obtenue sur la base des équivalences précédentes à partir de l'analyse des effluents de combustion est rapportée à la masse de particules oxydo-réductrices.

Malgré la teneur en NiO sensiblement plus faible des particules de masse d'oxydo-réduction selon l'invention (27% pour les particules selon l'invention contre 35% pour les particules selon l'art antérieur), la quantité d'oxygène délivrée par la masse d'oxydo-réduction selon l'invention est plus importante qu'avec la masse d'oxydo-réduction selon l'art antérieur.

La cérine-zircone joue donc bien un rôle de stockage d'oxygène dans le réacteur d'oxydation, et de déstockage d'oxygène dans le réacteur de réduction.

On constate que la masse d'oxydo-réduction selon la présente invention (cérine-zircone) présente une capacité de transfert d'oxygène 15 % plus importante que la masse d'oxydo-réduction selon l'art antérieur (zircone yttriée).

## Revendications

1. Masse oxydo-réductrice pour procédé d'oxydo-réduction en boucle, **caractérisée en ce que** ladite masse d'oxydo-réduction comprend, d'une part, un couple, ou un ensemble de couples d'oxydo-réduction, choisi dans le groupe formé par CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O₄/MnO, MnO/Mn, Co₃O₄/CoO, CoO/Co, et, d'autre part, un liant contenant au moins un oxyde mixte de cérine-zircone (Ce/Zr), de formule générale CeₓZr_{1·x}O₂, avec 0,05<x<0,95, et préférentiellement 0,5<x<0,9.

2. Masse oxydo-réductrice selon la revendication 1, dans laquelle la proportion de liant dans la dite masse d'oxydo-réduction varie de 10% à 95% poids, préférentiellement de 20 % à 80 % poids, et de manière encore préférée de 30% à 70% poids

3. Masse oxydo-réductrice selon l'une quelconque des revendications 1 à 2. dans laquelle le couple, ou l'ensemble de couples d'oxydo-réduction, est choisi dans le sous groupe formé par NiO/Ni, CuO/Cu, Fe₂O₃/Fe₃O₄, Mn₃O₄/MnO, CoOlCo,

4. Masse oxydo-réductrice selon l'une quelconque des revendications 1 à 3, dans laquelle la proportion de cérine-zircone dans le liant est comprise entre 0,1 et 1, et préférentiellement comprise entre 0,5 et 1, les autres éléments du liant étant choisi dans le groupe formé par l'alumine, les aluminates, l'YSZ, et les perovskites.

5. Masse oxydo-réductrice selon l'une des revendications 1 à 4, **caractérisée en ce qu'**elle se compose de poudre, de billes, d'extrudés, ou de revêtement déposé sur un substrat de type monolithe.

6. Application de la masse oxydo-réductrice selon l'une quelconque des revendications 1 à 5 à un procédé d'oxydo-réduction utilisant un réacteur d'oxydation et un réacteur de réduction fonctionnant tous les deux en lit circulant.

7. Application de la masse d'oxydo-réductrice selon l'une quelconque des revendications 1 à 5 à un procédé d'oxydo-réduction utilisant un réacteur rotatif.

8. Application de la masse d'oxydo-réductrice selon l'une quelconque des revendications 1 à 5 à un procédé d'oxydo-réduction utilisant un réacteur rotatif simulé.

## Claims

1. A redox mass for a loop redox process, **characterised in that** said redox mass includes, on the one hand, a redox pair, or a set of redox pairs, selected from the group formed by CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O₄/MnO, MnO/Mn, Co₃O₄/CoO, CoO/Co, and, on the other hand, a binder containing at least one mixed cerine-zirconia (Ce/Zr) oxide having the general formula CeₓZr_{1 x}O₂, where 0.05<x<0.95, and preferably 0.5<x<0.9.

2. The redox mass according to claim 1, wherein the proportion of binder in said redox mass ranges from 10% to 95% by weight, preferably from 20% to 80% by weight, and more preferably from 30% to 70% by weight.

3. The redox mass according to any one of claims 1 to 2, wherein the redox pair, or set of redox pairs, is selected from the subgroup formed by NiO/Ni, CuO/Cu, Fe₂O₃/FO₃O₄, Mn₃O₄/MnO, CoO/Co.

4. The redox mass according to any one of claims 1 to 3, wherein the proportion of cerine-zirconia in the binder is between 0.1 and 1, and preferably between 0.5 and 1, the other elements of the binder being selected from the group formed by alumina, aluminates, YSZ and perovskites.

5. The redox mass according to one of claims 1 to 4, **characterised in that** it consists of powder, beads, extruded products, or of a coating deposited on a monolith-type substrate.

6. Application of the redox mass according to any one of claims 1 to 5 to a redox process using an oxidation reactor and a reduction reactor which both function as a circulating bed.

7. Application of the redox mass according to any one of claims 1 to 5 to a redox process using a rotary reactor.

8. Application of the redox mass according to any one of claims 1 to 5 to a redox process using a simulated rotary reactor.

## Patentansprüche

1. Redoxmasse für ein Redoxschleifenverfahren, **dadurch gekennzeichnet, dass** die Redoxmasse einerseits ein Redoxpaar oder eine Gesamtheit von Redoxpaaren, ausgewählt aus der Gruppe gebildet aus CuO/Cu, Cu₂O/Cu, NiO/Ni, Fe₂O₃/Fe₃O₄, FeO/Fe, Fe₃O₄/FeO, MnO₂/Mn₂O₃, Mn₂O₃/Mn₃O₄, Mn₃O₄/MnO, MnO/Mn, Co₃O₄/CoO, CoO/Co, und andererseits ein Bindemittel umfasst, das mindestens ein Cerit-Zirkon-Mischoxid (Ce/Zr) mit der allgemeinen Formel CeₓZr₁₋ₓO₂, wobei gilt 0,05 < x < 0,95, und vorzugsweise 0,5 < x < 0,9, enthält.

2. Redoxmasse nach Anspruch 1, wobei der Bindemittelanteil in der Redoxmasse zwischen 10 Gew.-% und 95 Gew.-%, vorzugsweise zwischen 20 Gew.-% und 80 Gew.-% und noch stärker bevorzugt zwischen 30 Gew.-% und 70 Gew.-% variiert.

3. Redoxmasse nach irgendeinem der Ansprüche 1 bis 2, wobei das Redoxpaar oder die Gesamtheit von Redoxpaaren aus der Untergruppe, gebildet aus NiO/Ni, CuO/Cu, Fe₂O₃/Fe₃O₄, Mn₃O₄/MnO, CoO/Co, ausgewählt wird.

4. Redoxmasse nach irgendeinem der Ansprüche 1 bis 3, wobei der Anteil an Cerin-Zirkon in dem Bindemittel im Bereich zwischen 0,1 und 1 und vorzugsweise im Bereich zwischen 0,5 und 1 liegt, wobei die anderen Elemente des Bindemittels aus der Gruppe gebildet aus Aluminiumoxid, Aluminaten, YSZ und Perowskiten ausgewählt werden.

5. Redoxmasse nach einem der Ansprüche 1 bis 4, **dadurch gekennzeichnet, dass** sie aus Pulver, Kugeln, Extrudaten oder aus einer Beschichtung, die auf einem Substrat vom Typ Monolith abgeschieden wird, besteht.

6. Anwendung der Redoxmasse nach irgendeinem der Ansprüche 1 bis 5 in einem Redoxverfahren, bei dem ein Oxidationsreaktor und ein Reduktionsreaktor verwendet werden, die beide im umlaufenden Wirbelbett arbeiten.

7. Anwendung der Redoxmasse nach irgendeinem der Ansprüche 1 bis 5 in einem Redoxverfahren, bei dem ein Drehreaktor verwendet wird.

8. Anwendung der Redoxmasse nach irgendeinem der Anspruche 1 bis 5 in einem Redoxverfahren, bei dem ein simulierter Drehreaktor verwendet wird.
